# EUROPEAN PATENT APPLICATION

(11) **EP 4 625 198 A1**
(43) Date of publication of application: **01.10.2025**
(21) Application number: 23909434.5
(22) Date of filing: 08.10.2023
(51) Int. Cl.: G06F 16/242

(54) **METHOD AND APPARATUS FOR DETERMINING EXECUTION PLAN, AND COMPUTING DEVICE**

(30) Priority: 29.12.2022 CN 202211703447
(71) Applicant: Huawei Technologies Co., Ltd., Shenzhen, Guangdong 518129 (CN)
(72) Inventor: ZHANG, Ping, Shenzhen, Guangdong 518129 (CN)
(74) Representative: Körber, Martin Hans
(86) International application number: PCT/CN2023/123307
(87) International publication number: WO 2024/139500

(57) **Abstract**

An execution plan determining method and apparatus and a computing device are provided. The method includes: receiving a first structured query language SQL statement; selecting a first candidate policy from a candidate policy set based on a performance indicator of each candidate policy in the candidate policy set; obtaining, according to the first candidate policy, a first execution plan corresponding to the first SQL statement; and obtaining, from a database by executing the first execution plan, query data corresponding to the first SQL statement. In the method, an optimal execution plan policy used to generate a corresponding execution plan can be adaptively selected for any SQL statement, to reduce generation overheads of the execution plan while improving performance of the execution plan.

## Description

This application claims priority to Chinese Patent Application No. 202211703447.6, filed with the China National Intellectual Property Administration on December 29, 2022 and entitled "EXECUTION PLAN DETERMINING METHOD AND APPARATUS, AND COMPUTING DEVICE", which is incorporated herein by reference in its entirety.

### TECHNICAL FIELD

This application relates to the database field, and more specifically, to an execution plan determining method and apparatus, and a computing device.

### BACKGROUND

A structured query language (structured query language, SQL) is a computer language used to perform an operation on a relational database. In the database, SQL statements need to be converted into execution plans for execution. The execution plan may also be referred to as a query plan or an explain plan. In short, the execution plan is performance of the SQL statement in the database during execution. When an SQL statement is delivered to the database, an optimizer in the database may generate a corresponding execution plan for the SQL statement.

In a related technical solution, the database uses a custom plan (custom plan, cplan) policy for the first five SQL query statements. If an average cost of the cplan policy is greater than or equal to a cost of a generic plan (generic plan, gplan) policy, the gplan policy is used for a subsequent SQL statement. This manner depends on features of the first five SQL statements. Once a selection error occurs, the error cannot be corrected. In addition, a single gplan cannot meet a requirement of using different execution plans for different query parameters. It should be understood that the cplan policy may be understood as a policy for generating a customized execution plan for each SQL statement in the database, in other words, the policy may be used to generate a one-time execution plan (plan) for a given SQL statement. The gplan policy may be understood as a policy in which a generic plan (gplan) is cached, and each SQL statement uses the gplan as an execution plan of the SQL statement.

Therefore, how to adaptively select, for an SQL statement, an optimal execution plan policy used to generate a corresponding execution plan becomes an urgent technical problem to be resolved.

### SUMMARY

This application provides an execution plan determining method and apparatus, and a computing device. In the method, an optimal execution plan policy used to generate a corresponding execution plan can be adaptively selected for any SQL statement, to reduce generation overheads of the execution plan while improving performance of the execution plan.

According to a first aspect, an execution plan determining method is provided. The method includes: receiving a first structured query language SQL statement; selecting a first candidate policy from a candidate policy set based on a performance indicator of each candidate policy in the candidate policy set; obtaining, according to the first candidate policy, a first execution plan corresponding to the first SQL statement; and obtaining, from a database by executing the first execution plan, query data corresponding to the first SQL statement.

In the foregoing technical solution, a candidate policy may be selected from the candidate policy set based on the performance indicator of each candidate policy included in the candidate policy set, and a corresponding execution plan may be generated for an SQL statement according to the candidate policy. In this way, an optimal execution plan policy used to generate a corresponding execution plan can be adaptively selected for any SQL statement, to reduce generation overheads of the execution plan while improving performance of the execution plan.

With reference to the first aspect, in some implementations of the first aspect, the method further includes: determining the candidate policy set.

With reference to the first aspect, in some implementations of the first aspect, the candidate policy set includes at least two of the following candidate policies: a custom plan cplan policy, a generic plan gplan policy, and a multi-plan selection policy.

With reference to the first aspect, in some implementations of the first aspect, the performance indicator of each candidate policy is determined based on at least one of the following information: average execution time and an average execution cost, where the execution time is average execution time of at least one execution plan that separately corresponds to at least one SQL statement and that is generated according to each candidate policy, and the execution cost is an average execution cost of the at least one execution plan that separately corresponds to the at least one SQL statement and that is generated according to each candidate policy.

With reference to the first aspect, in some implementations of the first aspect, after obtaining, from the database by executing the first execution plan, the query data corresponding to the first SQL statement, the method further includes: recording execution time of the first execution plan; and updating average execution time of the first candidate policy based on the execution time of the first execution plan.

With reference to the first aspect, in some implementations of the first aspect, the method further includes: determining an execution cost of the first execution plan based on a cost model, where the cost model is used to determine the execution cost of the first execution plan, input information of the cost model includes the first execution plan, and output information of the cost model includes the execution cost of the first execution plan; and updating an average execution cost of the first candidate policy based on the execution cost of the first execution plan.

With reference to the first aspect, in some implementations of the first aspect, the performance indicator of each candidate policy is the average execution time of the at least one execution plan generated according to each candidate policy; and the first candidate policy is selected, from the candidate policy set based on that the average execution time of at least one execution plan generated according to the first candidate policy in the candidate policy set is the shortest, as a policy for generating the first execution plan corresponding to the first SQL statement.

With reference to the first aspect, in some implementations of the first aspect, the performance indicator of each candidate policy is the average execution cost of the at least one execution plan generated according to each candidate policy; and the first candidate policy is selected, from the candidate policy set based on that the average execution cost of at least one execution plan generated according to the first candidate policy in the candidate policy set is the lowest, as a policy for generating the first execution plan corresponding to the first SQL statement.

With reference to the first aspect, in some implementations of the first aspect, the performance indicator of each candidate policy is a score of each candidate policy, and the score of each candidate policy is determined based on the average execution time and the average execution cost of the at least one execution plan generated according to each candidate policy; and the first candidate policy is selected, from the candidate policy set based on that a score of the first candidate policy in the candidate policy set is the highest, as a policy for generating the first execution plan corresponding to the first SQL statement.

According to a second aspect, an execution plan determining apparatus is provided. The apparatus includes a receiving module, a processing module, and a query module. The receiving module is configured to receive a first structured query language SQL statement. The processing module is configured to select a first candidate policy from a candidate policy set based on a performance indicator of each candidate policy in the candidate policy set, where the candidate policy set includes a plurality of candidate policies, each candidate policy is used to generate an execution plan of an SQL statement, and the first candidate policy is used to generate a first execution plan corresponding to the first SQL statement.

A first candidate policy is selected from a candidate policy set based on a performance indicator of each candidate policy in the set, where the candidate policy set includes a plurality of candidate policies, each candidate policy is used to generate an execution plan of an SQL statement, and the first candidate policy is used to generate a first execution plan corresponding to the first SQL statement. The processing module is further configured to determine, according to the first candidate policy, the first execution plan corresponding to the first SQL statement, where the first execution plan includes a query manner of the first SQL statement. The query module is configured to obtain, from a database by executing the first execution plan, query data corresponding to the first SQL statement.

With reference to the second aspect, in some implementations of the second aspect, the processing module is further configured to: determine the candidate policy set.

With reference to the second aspect, in some implementations of the second aspect, the candidate policy set includes at least two of the following candidate policies: a custom plan cplan policy, a generic plan gplan policy, and a multi-plan selection policy.

With reference to the second aspect, in some implementations of the second aspect, the performance indicator of each candidate policy is determined based on at least one of the following information: average execution time and an average execution cost, where the execution time is average execution time of at least one execution plan that separately corresponds to at least one SQL statement and that is generated according to each candidate policy, and the execution cost is an average execution cost of the at least one execution plan that separately corresponds to the at least one SQL statement and that is generated according to each candidate policy.

With reference to the second aspect, in some implementations of the second aspect, the processing module is specifically configured to: record execution time of the first execution plan; and update average execution time of the first candidate policy based on the execution time of the first execution plan.

With reference to the second aspect, in some implementations of the second aspect, the processing module is specifically configured to: determine an execution cost of the first execution plan based on a cost model, where the cost model is used to determine the execution cost of the first execution plan, input information of the cost model includes the first execution plan, and output information of the cost model includes the execution cost of the first execution plan; and update an average execution cost of the first candidate policy based on the execution cost of the first execution plan.

With reference to the second aspect, in some implementations of the second aspect, the performance indicator of each candidate policy is the average execution time of the at least one execution plan generated according to each candidate policy, and the processing module is specifically configured to: select, from the candidate policy set based on that the average execution time of at least one execution plan generated according to the first candidate policy in the candidate policy set is the shortest, the first candidate policy as a policy for generating the first execution plan corresponding to the first SQL statement.

With reference to the second aspect, in some implementations of the second aspect, the performance indicator of each candidate policy is the average execution cost of the at least one execution plan generated according to each candidate policy, and the processing module is specifically configured to: select, from the candidate policy set based on that the average execution cost of at least one execution plan generated according to the first candidate policy in the candidate policy set is the lowest, the first candidate policy as a policy for generating the first execution plan corresponding to the first SQL statement.

With reference to the second aspect, in some implementations of the second aspect, the performance indicator of each candidate policy is a score of each candidate policy, the score of each candidate policy is determined based on the average execution time and the average execution cost of the at least one execution plan generated according to each candidate policy, and the processing module is specifically configured to: select, from the candidate policy set based on that a score of the first candidate policy in the candidate policy set is the highest, the first candidate policy as a policy for generating the first execution plan corresponding to the first SQL statement.

According to a third aspect, a computing device is provided. The computing device includes a processor and a memory, and optionally, further includes an input/output interface. The processor is configured to control the input/output interface to receive and send information. The memory is configured to store a computer program. The processor is configured to invoke the computer program from the memory and run the computer program, so that the processor performs the method in any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a fourth aspect, a chip is provided. The chip obtains instructions and executes the instructions to implement the method in any one of the first aspect and the implementations of the first aspect.

Optionally, in an implementation, the chip includes a processor and a data interface. The processor reads, through the data interface, instructions stored in a memory, to perform the method in any one of the first aspect and the implementations of the first aspect.

Optionally, in an implementation, the chip may further include a memory, where the memory stores instructions. The processor is configured to execute the instructions stored in the memory. When the instructions are executed, the processor is configured to perform the method in any one of the first aspect and the implementations of the first aspect.

According to a fifth aspect, a computer program product including instructions is provided. When the instructions are run by a computing device, the computing device is enabled to perform the method in any one of the first aspect and the implementations of the first aspect.

According to a sixth aspect, a computer-readable storage medium is provided. The computer-readable storage medium includes computer program instructions. When the computer program instructions are executed by a computing device, the computing device performs the method in any one of the first aspect and the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

### BRIEF DESCRIPTION OF DRAWINGS

FIG. 1 is a block diagram of an execution plan determining apparatus 100 according to an embodiment of this application;
FIG. 2 is a schematic flowchart of an execution plan determining method according to an embodiment of this application;
FIG. 3 is a block diagram of another execution plan determining apparatus 300 according to an embodiment of this application; and
FIG. 4 is a diagram of an architecture of a computing device 1500 according to an embodiment of this application.

### DESCRIPTION OF EMBODIMENTS

The following describes technical solutions of this application with reference to accompanying drawings.

All aspects, embodiments, or features are presented in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "corresponding, relevant (corresponding, relevant)", and "corresponding (corresponding)" may be interchangeably used sometimes. It should be noted that meanings expressed by the terms are consistent when differences are not emphasized.

A service scenario described in embodiments of this application is intended to describe the technical solutions of embodiments of this application more clearly, and does not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and other variants thereof all mean "include but are not limited to", unless otherwise specifically emphasized in another manner.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

For ease of understanding, terms and concepts related to embodiments of this application are first described below.

### 1. Structured query language (structured query language, SQL)

The SQL is a computer language used to perform an operation on a relational database. The operation may include but is not limited to storing, retrieving, updating, or managing data in the database. The SQL may include the following several common statements: an update statement, a query statement, a sorting statement, a summation statement, an average calculation statement, a maximum value calculation statement, a minimum value calculation statement, and the like.

In an example, the following lists a group of SQL query statements:
Select * from tab where tab.attr1=1;
Select * from tab where tab.attr1=2; and
Select * from tab where tab.attr1=3.

It should be understood that the foregoing group of SQL query statements have same semantics, and only query parameters are different. Therefore, the foregoing group of SQL query statements may also be described in a form of a query template (query template)+query parameters (query parameter). The query template is Select * from tab where tab.attr1=$1, and the query parameters $1 are {1, 2, 3}.

### 2. Execution plan (execution plan)

In a database, SQL statements need to be converted into execution plans for execution. The execution plan may also be referred to as a query plan or an explain plan. In short, the execution plan is performance of the SQL statement in the database during execution. When an SQL statement is delivered to the database, an optimizer in the database may generate a corresponding execution plan for the SQL statement.

In an example, an SQL query statement is used as an example. An execution plan generated by the optimizer for the SQL query statement may include the following information: estimated execution time of the SQL query statement, a manner of reading data from the database, tables in the database that are involved during a query, a query manner, whether to query based on an index, indexes that are used, and the like.

Therefore, different execution plans lead to different execution efficiency, and quality of the plan depends to a large extent on features (for example, a parameter value and a parameter selection rate) of a query parameter.

There are a plurality of execution plan policies. This is not specifically limited in embodiments of this application. The following lists several possible policies.

### 3. Custom plan (custom plan, cplan) policy

The cplan policy may be understood as generating a customized execution plan for each SQL statement in a database, that is, generating a one-time execution plan for a given SQL statement. The cplan policy is to customize a one-time execution plan for each SQL statement. Therefore, execution efficiency is high and performance is optimal. However, in the cplan policy, because the database needs to customize a corresponding execution plan for each SQL statement, execution plan generation costs are high.

### 4. Generic plan (generic plan, gplan) policy

The gplan policy may be understood as generating and caching a generic plan for an SQL statement template. In other words, for example, for a group of SQL query statements with same semantics, that is, the group of SQL query statements may be described in a form of a query template+query parameters, assuming that the query parameters meet a same feature, a database may generate and cache only a generic plan gplan for the query template. The group of SQL query statements with the same semantics may obtain the gplan from the cache and use the gplan. Because the gplan is a generic plan generated for a query template, generating an execution plan for each SQL query statement can be avoided, and therefore execution plan generation overheads can be reduced. However, the gplan policy does not consider a feature of a query parameter value in each SQL query statement. Therefore, compared with the cplan policy, execution efficiency of the gplan policy is poor, which leads to performance deterioration.

### 5. Multi-plan selection policy

The multi-plan selection policy may be understood as that a database generates and caches a plurality of candidate plans (a group of candidate plans). When an SQL statement needs to be executed, according to this policy, a parameter feature in the SQL statement is compared with a feature of each candidate plan, to select a most matched plan from the plurality of candidate plans. The multi-plan selection policy can effectively avoid plan generation overheads in the cplan policy, and can also avoid a disadvantage in the gplan policy that a parameter in the SQL statement is irrelevant. However, in an aspect, the multi-plan selection policy further requires additional overheads for performing matching on the parameter in the SQL statement and each candidate plan, which is unnecessary in many scenarios. In another aspect, the multi-plan selection policy requires caching the plurality of candidate plans, which consumes a large amount of memory space.

**Table 1**

| Policy | Descriptions | Memory consumption | Execution cost | Execution performance |
|---|---|---|---|---|
| cplan policy | Select a plan generated by invoking an optimizer each time | Low | High | An optimal policy varies in different scenarios, leading to uncertainty |
| gplan policy | Select a generic plan generated based on a default parameter | Medium | None | |
| Multi-plan selection policy | Select a most matched plan from a plurality of candidate plans based on a selection rate | High | Low | |

The foregoing Table 1 compares and describes the foregoing different policies in terms of memory consumption, an execution cost, execution performance, and the like.

In a related technical solution, a database uses the cplan policy for the first five SQL query statements. If an average cost of the cplan policy is greater than or equal to a cost of the gplan policy, the gplan policy is used for a subsequent SQL statement. This manner depends on features of the first five SQL statements. Once a selection error occurs, the error cannot be corrected. In addition, a single gplan cannot meet a requirement of using different execution plans for different query parameters.

In view of this, embodiments of this application provide an execution plan determining method, to adaptively select, for any SQL statement, an optimal execution plan policy used to generate a corresponding execution plan, so as to reduce generation overheads of the execution plan while improving performance of the execution plan.

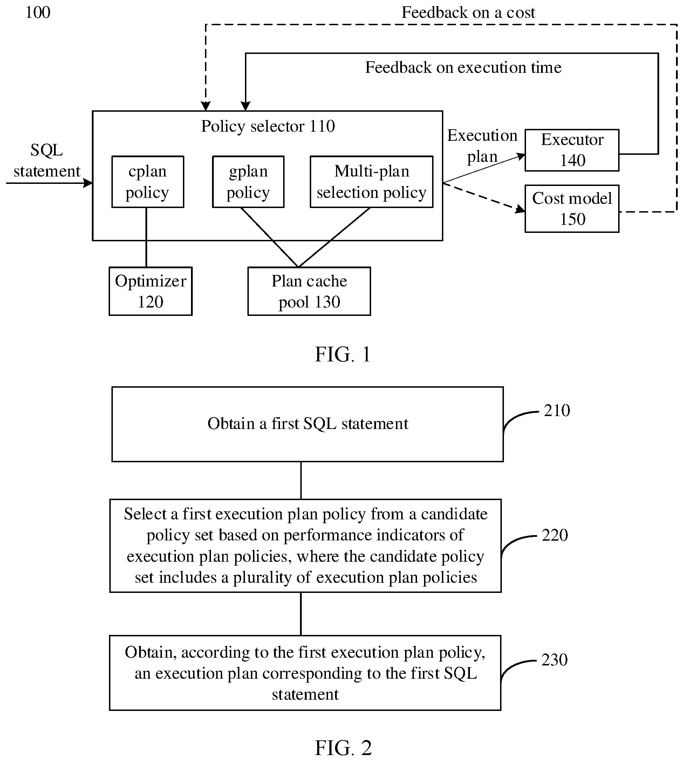

For ease of description, the following first describes an execution plan determining apparatus with reference to FIG. 1. It should be understood that the apparatus is configured to perform the execution plan determining method provided in embodiments of this application.

FIG. 1 is a block diagram of an execution plan determining apparatus 100 according to an embodiment of this application. As shown in FIG. 1, the apparatus 100 may include a policy selector 110, an optimizer 120, a plan cache pool 130, and an executor 140. Optionally, the apparatus 100 may include a cost model 150.

The policy selector 110 is configured to select an execution plan policy. For example, before each SQL statement is executed, the policy selector 110 determines an optimal execution plan policy for the SQL statement in a plurality of execution plan policies. The plurality of execution plan policies may include but are not limited to any two or more of the following policies: a cplan policy, a gplan policy, and a multi-plan selection policy.

The optimizer 120 is configured to generate a corresponding execution plan for each SQL statement according to the cplan policy. In other words, if the policy selector 110 selects the cplan policy, the policy selector 110 may invoke the optimizer 120 to generate a corresponding execution plan for a to-be-executed SQL statement.

The plan cache pool 130 is configured to store a gplan and/or a group of candidate plans. The policy selector 110 may obtain a corresponding execution plan from the plan cache pool 130 according to the selected policy. For example, if the policy selector 110 selects the gplan plan, the policy selector 110 may obtain a gplan from the plan cache pool 130. For another example, if the policy selector 110 selects the multi-plan selection policy, the policy selector 110 may obtain, from the group of candidate plans cached in the plan cache pool 130, an execution plan that matches an SQL statement.

The executor 140 is responsible for executing a plan, and may further feed back an execution result to the policy selector 110, to help the policy selector 110 update a performance parameter of the execution plan policy. For example, the execution result fed back by the executor 140 to the policy selector 110 is execution time of the execution plan, and the policy selector 110 may update average execution time of the selected policy based on the execution time. It should be understood that the average execution time may be used as a performance parameter of the execution plan policy, and is used to measure whether the execution plan policy is optimal.

The cost model 150 is responsible for determining an execution cost (cost) of the execution plan policy selected by the policy selector 110, and feeding back the cost (cost) to the policy selector 110, to help the policy selector 110 update a performance parameter of the execution plan policy. For example, the policy selector 110 may update, based on the cost (cost) fed back by the cost model 150, the cost (cost) of the execution plan policy selected by the policy selector 110. It should be understood that the cost is a value in a non-time unit; and the cost may be used as another performance parameter of the execution plan policy, and is used to measure whether the execution plan policy is optimal.

FIG. 2 is a schematic flowchart of an execution plan determining method according to an embodiment of this application. The method may be performed by the apparatus shown in FIG. 1, and the method may include steps 210 to 230. The following separately describes steps 210 to 230 in detail.

Step 210: Obtain a first SQL statement.

In an example, the policy selector 110 in FIG. 2 may receive the first SQL statement. In an example, the first SQL statement is an SQL query statement.

Step 220: Select a first execution plan policy from a candidate policy set based on performance indicators of execution plan policies, where the candidate policy set includes a plurality of execution plan policies.

For ease of description, the execution plan policy is briefly referred to as a policy below.

In this embodiment of this application, the performance indicator of the policy is used to measure whether the policy is a current optimal policy. There may be a plurality of performance indicators of the policy. This is not specifically limited in this embodiment of this application. In an example, the performance indicator of the policy may be execution time of an execution plan. In another example, the performance indicator of the policy may alternatively be an execution cost (cost) of an execution plan. In another example, the performance indicator of the policy may alternatively be a score determined for each policy based on execution time and an execution cost (cost) of an execution plan.

In this embodiment of this application, the candidate policy set may include the plurality of execution plan policies, and the plurality of policies include the first execution plan policy. The policy selector 110 in FIG. 2 may determine an optimal policy for the first SQL statement based on a performance indicator of each policy in the candidate policy set. For example, the optimal policy determined by the policy selector 110 for the first SQL statement based on the performance indicator of each policy in the candidate policy set is the first execution plan policy.

It should be understood that the plurality of execution plan policies included in the candidate policy set are not specifically limited in this embodiment. In an example, the candidate policy set may include but is not limited to the following policies or any two or more or all of the following policies: a cplan policy, a gplan policy, and a multi-plan selection policy. For specific descriptions of the cplan policy, the gplan policy, and the multi-plan selection policy, refer to the foregoing descriptions. Details are not described herein again.

In a possible implementation, for example, the performance indicator of the policy is the execution time of the execution plan. The policy selector 110 may use a policy with short average execution time as the first execution plan policy based on average execution time of each execution plan policy in the candidate policy set.

In another possible implementation, for example, the performance indicator of the policy is the execution cost (cost). The policy selector 110 may use a policy with a low execution cost (cost) as the first execution plan policy based on an execution cost (cost) of each execution plan policy in the candidate policy set for the first SQL statement.

In another possible implementation, for example, the performance indicator of the policy is the score. The policy selector 110 may use a policy with a high score as the first execution plan policy based on a score corresponding to each execution plan policy in the candidate policy set.

Optionally, before step 220, the policy selector 110 may further determine the candidate policy set. There are a plurality of specific implementations. The following describes several possible implementations.

In a possible implementation, the policy selector 110 may use all execution plan policies as the candidate policy set. For example, the candidate policy set includes the cplan policy, the gplan policy, and the multi-plan selection policy.

In another possible implementation, the policy selector 110 may alternatively select some execution plan policies from all execution plan policies as the candidate policy set in a pruning method.

For example, the candidate policy set includes the cplan policy and the gplan policy. For example, as shown in Table 1, on a premise that each policy can meet execution performance, overheads of the policies meet: gplan policy<multi-plan selection policy<cplan policy, and memory consumption of the policies meets: cplan policy<gplan policy<multi-plan selection policy. In an actual environment, for most SQL statements, execution efficiency of the gplan policy is comparable to that of the cplan policy. Therefore, in this case, the gplan policy and the cplan policy may be used as the candidate policy set, and the multi-plan selection policy does not need to be considered. In other words, the candidate policy set includes the cplan policy and the gplan policy, but does not include the multi-plan selection policy with higher memory consumption. Therefore, memory consumption of a database is reduced.

For another example, if it is found in a subsequent selection process that execution performance of the gplan policy is worse than execution performance of the cplan policy, the multi-plan selection policy (execution performance of the multi-plan selection policy is better than the execution performance of the gplan policy) may be considered to be added to the candidate policy set. In other words, in this case, the candidate policy set includes the cplan policy, the gplan policy, and the multi-plan selection policy.

Step 230: Obtain, according to the first execution plan policy, an execution plan corresponding to the first SQL statement.

In this embodiment of this application, after selecting the first execution plan policy from the candidate policy set, the policy selector 110 may obtain the corresponding execution plan for the first SQL statement according to the first execution plan policy. The following describes several possible implementations.

In an example, if the first execution plan policy is the cplan policy, the policy selector 110 may invoke the optimizer 120 to generate the corresponding execution plan for the first SQL statement, and send the execution plan to the executor 140.

In another example, if the first execution plan policy is the gplan policy, the policy selector 110 may obtain a stored gplan from the plan cache pool 130, and send the gplan to the executor 140.

In another example, if the first execution plan policy is the multi-plan selection policy, the policy selector 110 may obtain, from the group of candidate plans cached in the plan cache pool 130, an execution plan that matches the first SQL statement, and send the execution plan to the executor 140.

It should be understood that there are a plurality of specific implementations in which the policy selector 110 obtains, from the group of candidate plans, the execution plan that matches the first SQL statement. This is not specifically limited in this embodiment of this application. The following describes several possible implementations.

In a possible implementation, the policy selector 110 may obtain, from the group of candidate plans in a recost method, the execution plan that matches the first SQL statement. In the recost method, a cost of using each candidate plan for a parameter in the first SQL statement is first evaluated, and a candidate plan with a lowest cost is used as the execution plan that matches the first SQL statement.

In another possible implementation, the policy selector 110 may alternatively obtain, from the group of candidate plans in a feature distance method, the execution plan that matches the first SQL statement. In the feature distance method, a selection rate of a parameter in the first SQL statement is first extracted, a distance between the selection rate of the parameter and a parameter selection rate of each candidate plan is calculated, and a candidate plan with a shortest distance is used as the execution plan that matches the first SQL statement.

Step 240: Execute the execution plan corresponding to the first SQL statement.

In this embodiment of this application, after obtaining the execution plan that corresponds to the first SQL statement and that is sent by the policy selector 110, the executor 140 may execute the execution plan corresponding to the first SQL statement, to obtain query data corresponding to the first SQL statement from the database. For example, the first SQL statement is a query statement, and the executor 140 may obtain queried data from the database by executing the execution plan corresponding to the first SQL statement, and return the queried data to a user.

In some embodiments, after executing the execution plan, the executor 140 may further feed back execution time of the plan to the policy selector 110, to help the policy selector 110 update a performance indicator of the first execution plan policy based on the execution time. In this way, after obtaining a next SQL statement (for example, a second SQL statement), the policy selector 110 selects an optimal execution plan policy for the second SQL statement based on an updated performance indicator of each policy in the candidate policy set.

It should be understood that the next SQL statement (for example, the second SQL statement) may be the same as the first SQL statement, or may be different from the first SQL statement. This is not specifically limited in this embodiment of this application. If the next SQL statement is still the first SQL statement, in other words, the first SQL statement is executed for a plurality of times, an optimal policy is determined for the first SQL statement.

In some embodiments, if the apparatus 100 in FIG. 1 includes the cost model 150, the cost model 150 may further feed back a cost of the execution plan corresponding to the first SQL statement to the policy selector 110, to help the policy selector 110 update a performance indicator of the first execution plan policy based on the cost. In this way, after obtaining the next SQL statement (for example, the second SQL statement), the policy selector 110 selects an optimal execution plan policy for the second SQL statement based on an updated performance indicator of each policy in the candidate policy set.

It should be noted that the cost model 150 may determine the cost before the executor 140 executes the execution plan corresponding to the first SQL statement, or may determine the cost after the executor 140 executes the execution plan corresponding to the first SQL statement. This is not specifically limited in this embodiment of this application.

In the foregoing technical solution, a policy may be selected from the candidate policy set based on the performance indicator of each policy included in the candidate policy set, and a corresponding execution plan may be generated for an SQL statement according to the policy. In this way, an optimal execution plan policy can be adaptively selected for each SQL statement, to reduce generation overheads of an execution plan while improving performance of the execution plan.

The following describes in detail a specific implementation in which the policy selector 110 selects a corresponding policy for an SQL statement by using an example in which the candidate policy set includes the cplan policy, the gplan policy, and the multi-plan selection policy. It should be understood that the following examples are merely intended to help a person skilled in the art understand embodiments of this application, instead of limiting embodiments of this application to specific values or specific scenarios shown in the examples. Clearly, a person skilled in the art can make various equivalent modifications or changes based on the examples described below, and such modifications and changes also fall within the scope of embodiments of this application.

In this embodiment of this application, before receiving a 1^{st} SQL statement, the apparatus 100 shown in FIG. 1 may first initialize a performance indicator (for example, execution time) of each policy included in the candidate policy set, for example, set the performance indicator of each policy to 0 or another initialized value. This is not specifically limited in this embodiment of this application.

In an example, the apparatus 100 shown in FIG. 1 receives the 1^{st} SQL statement. The policy selector 110 randomly selects a policy from the candidate policy set with a probability of ε, where ε is usually a small value, for example, 0.001. Assuming that the policy selector 110 randomly selects the cplan policy from the candidate policy set, the policy selector 110 may generate a corresponding execution plan for the 1^{st} SQL statement according to the cplan policy, and the executor 140 is responsible for executing the plan and recording execution time. The executor 140 feeds back the recorded execution time to the policy selector 110. The policy selector 110 updates a performance indicator (that is, average execution time, which is assumed to be 0.02) of the selected cplan policy based on an initialized performance indicator of the cplan policy and the execution time fed back by the executor 140, and waits for a next SQL statement.

In another example, the apparatus 100 shown in FIG. 1 receives a 2^{nd} SQL statement. The policy selector 110 randomly selects the gplan policy from the candidate policy set with a probability. The policy selector 110 may obtain a stored gplan from the plan cache pool 130 according to the gplan policy, and send the gplan to the executor 140. The executor 140 is responsible for executing the gplan, and feeding back recorded execution time to the policy selector 110. The policy selector 110 updates a performance indicator (that is, average execution time, which is assumed to be 0.1) of the selected gplan policy based on an initialized performance indicator of the gplan policy and the execution time fed back by the executor 140, and waits for a next SQL statement.

In another example, the apparatus 100 shown in FIG. 1 receives a 3^{rd} SQL statement. The policy selector 110 randomly selects the multi-plan selection policy from the candidate policy set with a probability. The policy selector 110 may obtain, from the plan cache pool 130 according to the multi-plan selection policy, an execution plan that matches the SQL statement, and send the execution plan to the executor 140. The executor 140 is responsible for executing the plan, and feeding back recorded execution time to the policy selector 110. The policy selector 110 updates a performance indicator (that is, average execution time, which is assumed to be 0.01) of the selected multi-plan selection policy based on an initialized performance indicator of the multi-plan selection policy and the execution time fed back by the executor 140, and waits for a next SQL statement.

In another example, the apparatus 100 shown in FIG. 1 receives a 4^{th} SQL statement. The policy selector 110 selects a policy from the candidate policy set based on an updated performance indicator of each policy in the candidate policy set. For example, the updated performance indicator of each policy is average execution time. Assuming that average execution time of the cplan policy is 0.02, average execution time of the gplan policy is 0.1, and average execution time of the multi-plan selection policy is 0.01, the policy selector 110 may select, from the candidate policy set, the gplan policy with the shortest average execution time. The policy selector 110 may obtain a stored gplan from the plan cache pool 130 according to the gplan policy, and send the gplan to the executor 140. The executor 140 is responsible for executing the gplan, and feeding back recorded execution time to the policy selector 110. The policy selector 110 updates a performance indicator of the selected gplan policy again based on a current performance indicator of the gplan policy and the execution time fed back by the executor 140. The rest may be deduced by analogy. The policy selector 110 waits for a next SQL statement.

In another example, it is assumed that the policy selector 110 selects the gplan policy for a k^{th} SQL statement according to the foregoing method; and after the executor 140 executes a gplan, average execution time of the gplan policy in the candidate policy set is updated from 0.001 to 0.05. In this case, it is assumed that average execution time of the cplan policy is 0.03, and average execution time of the multi-plan selection policy is 0.005. For a (k+1)^{th} SQL statement, the policy selector 110 is to use the multi-plan selection policy (with the average execution time of 0.005) with a probability of 1-ε, instead of using the gplan policy.

It should be understood that the following examples are merely intended to help a person skilled in the art understand embodiments of this application, instead of limiting embodiments of this application to specific values or specific scenarios shown in the examples. Clearly, a person skilled in the art can make various equivalent modifications or changes based on the examples described below, and such modifications and changes also fall within the scope of embodiments of this application.

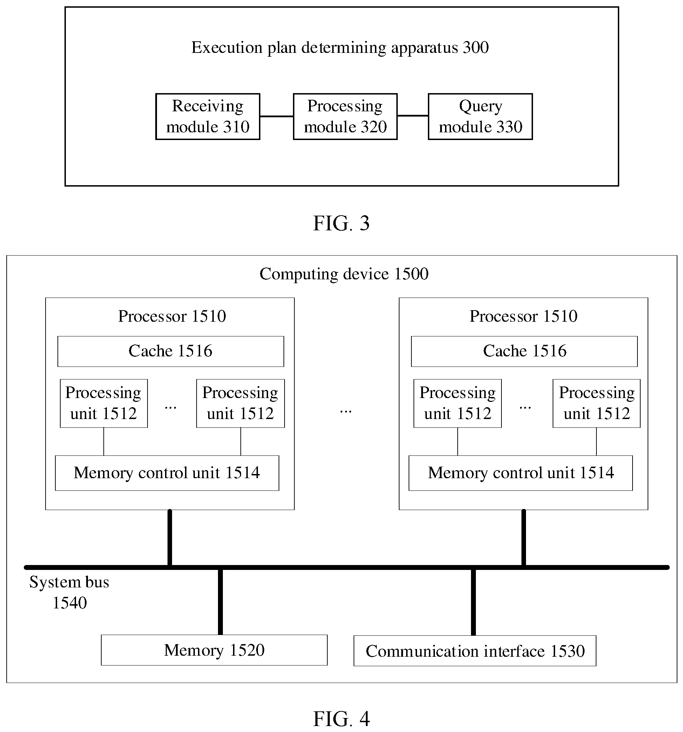

The foregoing describes in detail the execution plan determining method provided in embodiments of this application with reference to FIG. 1 and FIG. 2. The following describes in detail apparatus embodiments of this application with reference to FIG. 3 and FIG. 4. It should be understood that descriptions of the method embodiment correspond to descriptions of the apparatus embodiments. Therefore, for a part that is not described in detail, refer to the foregoing method embodiment.

FIG. 3 is a block diagram of an execution plan determining apparatus 300 according to an embodiment of this application. The apparatus 300 may be implemented by using software, hardware, or a combination thereof. The apparatus 300 provided in this embodiment of this application may implement the method procedure shown in FIG. 2 in embodiments of this application. The apparatus 300 includes a receiving module 310, a processing module 320, and a query module 330.

The receiving module 310 is configured to receive a first structured query language SQL statement. The processing module 320 is configured to select a first candidate policy from a candidate policy set based on a performance indicator of each candidate policy in the candidate policy set, where the candidate policy set includes a plurality of candidate policies, each candidate policy is used to generate an execution plan of an SQL statement, and the first candidate policy is used to generate a first execution plan corresponding to the first SQL statement. The processing module 320 is further configured to determine, according to the first candidate policy, the first execution plan corresponding to the first SQL statement, where the first execution plan includes a query manner of the first SQL statement. The query module 330 is configured to obtain, from a database by executing the first execution plan, query data corresponding to the first SQL statement.

Optionally, the processing module 320 is further configured to: determine the candidate policy set.

Optionally, the candidate policy set includes at least two of the following candidate policies: a custom plan cplan policy, a generic plan gplan policy, and a multi-plan selection policy.

Optionally, the performance indicator of each candidate policy is determined based on at least one of the following information: average execution time and an average execution cost, where the execution time is average execution time of at least one execution plan that separately corresponds to at least one SQL statement and that is generated according to each candidate policy, and the execution cost is an average execution cost of the at least one execution plan that separately corresponds to the at least one SQL statement and that is generated according to each candidate policy.

Optionally, the processing module 320 is specifically configured to: record execution time of the first execution plan; and update average execution time of the first candidate policy based on the execution time of the first execution plan.

Optionally, the processing module 320 is specifically configured to: determine an execution cost of the first execution plan based on a cost model, where the cost model is used to determine the execution cost of the first execution plan, input information of the cost model includes the first execution plan, and output information of the cost model includes the execution cost of the first execution plan; and update an average execution cost of the first candidate policy based on the execution cost of the first execution plan.

Optionally, the performance indicator of each candidate policy is the average execution time of the at least one execution plan generated according to each candidate policy, and the processing module 320 is specifically configured to: select, from the candidate policy set based on that the average execution time of at least one execution plan generated according to the first candidate policy in the candidate policy set is the shortest, the first candidate policy as a policy for generating the first execution plan corresponding to the first SQL statement.

Optionally, the performance indicator of each candidate policy is the average execution cost of the at least one execution plan generated according to each candidate policy, and the processing module 320 is specifically configured to: select, from the candidate policy set based on that the average execution cost of at least one execution plan generated according to the first candidate policy in the candidate policy set is the lowest, the first candidate policy as a policy for generating the first execution plan corresponding to the first SQL statement.

Optionally, the performance indicator of each candidate policy is a score of each candidate policy, the score of each candidate policy is determined based on the average execution time and the average execution cost of the at least one execution plan generated according to each candidate policy, and the processing module 320 is specifically configured to: select, from the candidate policy set based on that a score of the first candidate policy in the candidate policy set is the highest, the first candidate policy as a policy for generating the first execution plan corresponding to the first SQL statement.

The apparatus 300 herein may be embodied in a form of a functional module. The term "module" herein may be implemented in a form of software and/or hardware. This is not specifically limited.

For example, the "module" may be a software program, a hardware circuit, or a combination thereof that implements the foregoing function. For example, the following uses the receiving module 310 as an example to describe an implementation of the receiving module 310. Similarly, for implementations of other modules such as the processing module 320 and the query module 330, refer to the implementation of the receiving module 310.

The receiving module 310 is used as an example of a software functional unit, and the receiving module 310 may include code run on a compute instance. The compute instance may include at least one of a physical host (computing device), a virtual machine, and a container. Further, there may be one or more compute instances. For example, the receiving module 310 may include code run on a plurality of hosts/virtual machines/containers.

The receiving module 310 is used as an example of a hardware functional unit, and the receiving module 310 may include at least one computing device, for example, a server. Alternatively, the receiving module 310 may be a device implemented by an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), a generic array logic (generic array logic, GAL), or any combination thereof.

Therefore, modules in the examples described in embodiments of this application can be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, the receiving module 310 may be configured to perform any step in the foregoing method, the processing module 320 may be configured to perform any step in the foregoing method, and the query module 330 may be configured to perform any step in the foregoing method. Steps implemented by the receiving module 310, the processing module 320, and the query module 330 may be specified as required, and all functions of the foregoing apparatus are implemented by the receiving module 310, the processing module 320, and the query module 330 by separately implementing different steps in the foregoing method.

In addition, the apparatus embodiment and the method embodiment provided in the foregoing embodiments belong to a same concept. For a specific implementation process of the apparatus embodiment, refer to the method embodiment. Details are not described herein again.

The method provided in embodiments of this application may be performed by a computing device, and the computing device may also be referred to as a computer system. The computer system includes a hardware layer, an operating system layer running above the hardware layer, and an application layer running above the operating system layer. The hardware layer includes hardware such as a processing unit, a memory, and a memory control unit. Subsequently, functions and structures of the hardware are described in detail. An operating system is any one or more types of computer operating systems that implement service processing by using a process (process), for example, a Linux operating system, a Unix operating system, an Android operating system, an iOS operating system, or a Windows operating system. The application layer includes applications such as a browser, an address book, word processing software, and instant messaging software. In addition, optionally, the computer system is a handheld device such as a smartphone, or a terminal device such as a personal computer. This is not specifically limited in this application, provided that the method provided in embodiments of this application can be implemented. The method provided in embodiments of this application may be performed by a computing device or a functional module in a computing device that can invoke and execute a program.

With reference to FIG. 4, the following describes in detail the computing device provided in embodiments of this application.

FIG. 4 is a diagram of an architecture of a computing device 1500 according to an embodiment of this application. The computing device 1500 may be a server, a computer, or another device with a computing capability. The computing device 1500 shown in FIG. 4 includes at least one processor 1510 and a memory 1520.

It should be understood that a quantity of processors and a quantity of memories in the computing device 1500 are not limited in this application.

The processor 1510 executes instructions in the memory 1520, so that the computing device 1500 implements the method provided in this application. Alternatively, the processor 1510 executes instructions in the memory 1520, so that the computing device 1500 implements the functional modules provided in this application to implement the method provided in this application.

Optionally, the computing device 1500 further includes a communication interface 1530. The communication interface 1530 uses a transceiver module, for example, but not limited to, a network interface card or a transceiver, to implement communication between the computing device 1500 and another device or a communication network.

Optionally, the computing device 1500 further includes a system bus 1540. The processor 1510, the memory 1520, and the communication interface 1530 are separately connected to the system bus 1540. The processor 1510 can access the memory 1520 through the system bus 1540. For example, the processor 1510 can read and write data or execute code in the memory 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified as an address bus, a data bus, a control bus, or the like. For ease of representation, only one thick line is used to represent the bus in FIG. 4, but this does not mean that there is only one bus or only one type of bus.

In a possible implementation, a function of the processor 1510 is mainly to interpret instructions (or code) of a computer program and process data in computer software. The instructions of the computer program and the data in the computer software can be stored in the memory 1520 or a cache 1516.

Optionally, the processor 1510 may be an integrated circuit chip and has a signal processing capability. By way of example, and not limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction-level unit, and a bus interface.

In an implementation example, the memory control unit 1514 is configured to control data exchange between the memory 1520 and the processing unit 1512. Specifically, the memory control unit 1514 receives a memory access request from the processing unit 1512, and controls access to the memory based on the memory access request. By way of example, and not limitation, the memory control unit is a component, for example, a memory management unit (memory management unit, MMU).

In an implementation example, each memory control unit 1514 performs addressing for the memory 1520 through the system bus. In addition, an arbiter (not shown in FIG. 4) is configured in the system bus, and the arbiter is responsible for processing and coordinating contention-based access of a plurality of processing units 1512.

In an implementation example, the processing unit 1512 and the memory control unit 1514 are communicatively connected through a connection line such as an address line in a chip, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for the required data. If the data is found, the processing unit 1512 directly reads the data; or if the data is not found, the processing unit 1512 searches the memory for the data. Because the cache runs much faster than the memory, a function of the cache is to help the processing unit 1512 run faster.

The memory 1520 can provide running space for a process in the computing device 1500. For example, the memory 1520 stores a computer program (to be specific, program code) used to generate the process. After the computer program is run by the processor to generate the process, the processor allocates corresponding storage space to the process in the memory 1520. Further, the storage space further includes a text segment, an initialized data segment, an uninitialized data segment, a stack segment, a heap segment, and the like. The memory 1520 stores, in the storage space corresponding to the process, data generated during running of the process, for example, intermediate data or process data.

Optionally, the memory is also referred to as a storage, and a function of the memory is to temporarily store operation data in the processor 1510 and data exchanged with an external memory, for example a hard disk. Provided that the computer runs, the processor 1510 schedules, to the storage for an operation, data on which the operation needs to be performed, and the processing unit 1512 sends a result after the operation is completed.

By way of example, and not limitation, the memory 1520 is a volatile memory or a nonvolatile memory, or may include both a volatile memory and a nonvolatile memory. The nonvolatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory 1520 of the system and method described in this specification includes but is not limited to these memories and any memory of another appropriate type.

The listed structure of the computing device 1500 is merely an example for description, and this application is not limited thereto. The computing device 1500 in this embodiment of this application includes various types of hardware in a computer system in a conventional technology. For example, the computing device 1500 further includes a memory other than the memory 1520, for example, a magnetic disk storage. A person skilled in the art should understand that the computing device 1500 may further include another component necessary for implementing normal running. In addition, a person skilled in the art should understand that, based on a specific requirement, the computing device 1500 may further include a hardware component for implementing another additional function. Moreover, a person skilled in the art should understand that the computing device 1500 may alternatively include only a component necessary for implementing embodiments of this application, and not necessarily include all the components shown in FIG. 4.

An embodiment of this application further provides a computing device cluster. The computing device cluster includes at least one computing device. The computing device may be a server. In some embodiments, the computing device may alternatively be a terminal device, for example, a desktop computer, a notebook computer, or a smartphone.

In this embodiment, a computer program product including instructions is further provided. The computer program product may be software or a program product that includes instructions and that can be run on a computing device or that can be stored in any usable medium. When the computer program product runs on the computing device, the computing device is enabled to perform the method provided above, or the computing device is enabled to implement functions of the apparatus provided above.

In this embodiment, a computer-readable storage medium is further provided. The computer-readable storage medium may be any usable medium that can be accessed by a computing device, or a data storage device such as a data center including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions. When the instructions in the computer-readable storage medium are executed on the computing device, the computing device is enabled to perform the method provided above.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An execution plan determining method, comprising:
receiving a first structured query language SQL statement;
selecting a first candidate policy from a candidate policy set based on a performance indicator of each candidate policy in the candidate policy set, wherein the candidate policy set comprises a plurality of candidate policies, each candidate policy is used to generate an execution plan of an SQL statement, and the first candidate policy is used to generate a first execution plan corresponding to the first SQL statement;
determining, according to the first candidate policy, the first execution plan corresponding to the first SQL statement, wherein the first execution plan comprises a query manner of the first SQL statement; and
obtaining, from a database by executing the first execution plan, query data corresponding to the first SQL statement.

2. The method according to claim 1, wherein the method further comprises:
determining the candidate policy set.

3. The method according to claim 1 or 2, wherein the candidate policy set comprises at least two of the following candidate policies: a custom plan cplan policy, a generic plan gplan policy, and a multi-plan selection policy.

4. The method according to any one of claims 1 to 3, wherein the performance indicator of each candidate policy is determined based on at least one of the following information: average execution time and an average execution cost, wherein the execution time is average execution time of at least one execution plan that separately corresponds to at least one SQL statement and that is generated according to each candidate policy, and the execution cost is an average execution cost of the at least one execution plan that separately corresponds to the at least one SQL statement and that is generated according to each candidate policy.

5. The method according to claim 4, wherein after obtaining, from the database by executing the first execution plan, the query data corresponding to the first SQL statement, the method further comprises:
recording execution time of the first execution plan; and
updating average execution time of the first candidate policy based on the execution time of the first execution plan.

6. The method according to claim 4, wherein the method further comprises:
determining an execution cost of the first execution plan based on a cost model, wherein the cost model is used to determine the execution cost of the first execution plan, input information of the cost model comprises the first execution plan, and output information of the cost model comprises the execution cost of the first execution plan; and
updating an average execution cost of the first candidate policy based on the execution cost of the first execution plan.

7. The method according to any one of claims 1 to 6, wherein the performance indicator of each candidate policy is the average execution time of the at least one execution plan generated according to each candidate policy; and
selecting the first candidate policy from the candidate policy set based on the performance indicator of each candidate policy in the candidate policy set comprises:
selecting, from the candidate policy set based on that the average execution time of at least one execution plan generated according to the first candidate policy in the candidate policy set is the shortest, the first candidate policy as a policy for generating the first execution plan corresponding to the first SQL statement.

8. The method according to any one of claims 1 to 6, wherein the performance indicator of each candidate policy is the average execution cost of the at least one execution plan generated according to each candidate policy; and
selecting the first candidate policy from the candidate policy set based on the performance indicator of each candidate policy in the candidate policy set comprises:
selecting, from the candidate policy set based on that the average execution cost of at least one execution plan generated according to the first candidate policy in the candidate policy set is the lowest, the first candidate policy as a policy for generating the first execution plan corresponding to the first SQL statement.

9. The method according to any one of claims 1 to 6, wherein the performance indicator of each candidate policy is a score of each candidate policy, and the score of each candidate policy is determined based on the average execution time and the average execution cost of the at least one execution plan generated according to each candidate policy; and
selecting the first candidate policy from the candidate policy set based on the performance indicator of each candidate policy in the candidate policy set comprises:
selecting, from the candidate policy set based on that a score of the first candidate policy in the candidate policy set is the highest, the first candidate policy as a policy for generating the first execution plan corresponding to the first SQL statement.

10. An execution plan determining apparatus, comprising:
a receiving module, configured to receive a first structured query language SQL statement;
a processing module, configured to select a first candidate policy from a candidate policy set based on a performance indicator of each candidate policy in the candidate policy set, wherein the candidate policy set comprises a plurality of candidate policies, each candidate policy is used to generate an execution plan of an SQL statement, and the first candidate policy is used to generate a first execution plan corresponding to the first SQL statement, wherein
the processing module is further configured to determine, according to the first candidate policy, the first execution plan corresponding to the first SQL statement, wherein the first execution plan comprises a query manner of the first SQL statement; and
a query module, configured to obtain, from a database by executing the first execution plan, query data corresponding to the first SQL statement.

11. The apparatus according to claim 10, wherein the processing module is further configured to:
determine the candidate policy set.

12. The apparatus according to claim 10 or 11, wherein the candidate policy set comprises at least two of the following candidate policies: a custom plan cplan policy, a generic plan gplan policy, and a multi-plan selection policy.

13. The apparatus according to any one of claims 10 to 12, wherein the performance indicator of each candidate policy is determined based on at least one of the following information: average execution time and an average execution cost, wherein the execution time is average execution time of at least one execution plan that separately corresponds to at least one SQL statement and that is generated according to each candidate policy, and the execution cost is an average execution cost of the at least one execution plan that separately corresponds to the at least one SQL statement and that is generated according to each candidate policy.

14. The apparatus according to claim 13, wherein the processing module is specifically configured to:
record execution time of the first execution plan; and
update average execution time of the first candidate policy based on the execution time of the first execution plan.

15. The apparatus according to claim 13, wherein the processing module is specifically configured to:
determine an execution cost of the first execution plan based on a cost model, wherein the cost model is used to determine the execution cost of the first execution plan, input information of the cost model comprises the first execution plan, and output information of the cost model comprises the execution cost of the first execution plan; and
update an average execution cost of the first candidate policy based on the execution cost of the first execution plan.

16. The apparatus according to any one of claims 10 to 15, wherein the performance indicator of each candidate policy is the average execution time of the at least one execution plan generated according to each candidate policy, and the processing module is specifically configured to:
select, from the candidate policy set based on that the average execution time of at least one execution plan generated according to the first candidate policy in the candidate policy set is the shortest, the first candidate policy as a policy for generating the first execution plan corresponding to the first SQL statement.

17. The apparatus according to any one of claims 10 to 15, wherein the performance indicator of each candidate policy is the average execution cost of the at least one execution plan generated according to each candidate policy, and the processing module is specifically configured to:
select, from the candidate policy set based on that the average execution cost of at least one execution plan generated according to the first candidate policy in the candidate policy set is the lowest, the first candidate policy as a policy for generating the first execution plan corresponding to the first SQL statement.

18. The apparatus according to any one of claims 10 to 15, wherein the performance indicator of each candidate policy is a score of each candidate policy, the score of each candidate policy is determined based on the average execution time and the average execution cost of the at least one execution plan generated according to each candidate policy, and the processing module is specifically configured to:
select, from the candidate policy set based on that a score of the first candidate policy in the candidate policy set is the highest, the first candidate policy as a policy for generating the first execution plan corresponding to the first SQL statement.

19. A computing device, comprising a processor and a memory, wherein the processor is configured to execute instructions stored in the memory, to enable the computing device to perform the method according to any one of claims 1 to 9.

20. A computer program product comprising instructions, wherein when the instructions are run by a computing device, the computing device is enabled to perform the method according to any one of claims 1 to 9.

21. A computer-readable storage medium, comprising computer program instructions, wherein when the computer program instructions are executed by a computing device, the computing device performs the method according to any one of claims 1 to 9.
